Europäisches Patentamt

European Patent Office

Office européen des brevets

(19)

(11) Veröffentlichungsnummer : **0 093 939**
**B1**

(12) EUROPÄISCHE PATENTSCHRIFT

(45) Veröffentlichungstag der Patentschrift :
20.08.86

(21) Anmeldenummer : 83104045.6

(22) Anmeldetag : 25.04.83

(51) Int. Cl.⁴ : **G 01 N 21/37**

(54) Nichtdispersiver Infrarot-Gasanalysator.

(30) Priorität : 30.04.82 JP 72947/82

(43) Veröffentlichungstag der Anmeldung :
16.11.83 Patentblatt 83/46

(45) Bekanntmachung des Hinweises auf die Patenterteilung : 20.08.86 Patentblatt 86/34

(84) Benannte Vertragsstaaten :
DE FR SE

(56) Entgegenhaltungen :
DE-A- 2 702 744
US-A- 3 885 162

(73) Patentinhaber : FUJI ELECTRIC CO. LTD.
1-1, Tanabeshinden, Kawasaki-ku
Kawasaki 210 (JP)

(72) Erfinder : Nakano, Masayoshi
1-9-4, Asahigaoka
Hino-shi, Tokyo (JP)
Erfinder : Hamada, Toshiyoshi
1-120, Sekimachi
Nerima-ku, Tokyo (JP)

(74) Vertreter : Mehl, Ernst, Dipl.-Ing.
Postfach 22 01 76
D-8000 München 22 (DE)

EP 0 093 939 B1

**Beschreibung**

Die Erfindung bezieht sich auf einen nichtdispersiven Infrarot-Gasanalysator mit einer Strahlungsquelle, einem rotierenden Unterbrecher zur periodischen Unterbrechung der IR-Strahlung, einer das zu untersuchende Gasgemisch enthaltenden Meßzelle, die, an ihren Stirnseiten mit strahlungsdurchlässigen Fenstern versehen, im Strahlengang angeordnet ist, einem pneumatischen Detektorsystem, bestehend aus einer ersten und einer im Strahlengang dahinter angeordneten zweiten Detektorkammer, die beide mit dem Meßgas oder einem, gleiches Absorptionsverhalten aufweisenden Gas gefüllt und an ihren Stirnseiten mit strahlungsdurchlässigen Fenstern versehen sind, sowie einem in einer die Detektorkammern verbindenden Leitung angeordneten, auf Druck- oder Strömung ansprechenden Meßfühler, mit signalverarbeitenden Mitteln zur Bildung eines dem Meßgasgehalt entsprechenden Meßsignals aus dem elektrischen Ausgangssignal des Meßfühlers und mit einem mechanisch verstellbaren reflektierenden Mittel zur Reflexion mindestens eines Teils der aus dem rückwärtigen Fenster der zweiten Detektorkammer austretenden Strahlung in diese zurück.

Die Langzeitstabilität von NDIR-Gasanalysatoren hängt im wesentlichen von der Nullpunkts- und der Meßspannendrift ab, die wiederum von Änderungen der Strahlungsintensität, Änderungen der Detektorempfindlichkeit und durch absorbierende Ablagerungen auf den Fenstern des Strahlengangs hervorgerufen wird.

Zum Einstellen des Nullpunkts und des Meßspannenendwerts ist aus DE-A-27 02 744 bereits ein NDIR-Gasanalysator mit den eingangs angegebenen Merkmalen bekannt, bei dem durch Verstellen eines hinter dem Austrittsfenster der zweiten Detektorkammer angeordneten Spiegels der Anteil des reflektierten Lichtes bis zum Nullpunktabgleich geändert wird.

Dies bedeutet jedoch bei in Industrieprozessen eingesetzten, ständig betriebenen Gasanalysatoren, daß zum Zwecke der Nullpunktüberprüfung und Nachkalibrierung der Meßvorgang unterbrochen oder ein Ersatzgerät eingeschaltet werden muß.

Es besteht somit die Aufgabe, einen NDIR-Gasanalysator so zu verbessern, daß der Einfluß der Nullpunkt- und Meßspannendrift selbsttätig ausgeschaltet und eine große Langzeitstabilität erreicht wird.

Eine Lösung der Aufgabe wird darin gesehen, daß bei einem NDIR-Gasanalysator der im Oberbegriff des Anspruchs 1 bezeichneten Art das mechanisch verstellbare, reflektierende Mittel periodisch in den Strahlengang der austretenden Strahlung bringbar ist und die signalverarbeitenden Mittel eine Schaltungsanordnung zur Bildung des Verhältnisses der Ausgangssignale des Druck- oder Strömungsfühlers bei reflektierter und bei nicht reflektierter Strahlung enthalten.

Durch die kontinuierliche Verhältnisbildung wird die Nullpunkt- und Meßspannendrift ausgeschaltet, die Langzeitstabilität der Messung wird erheblich vergrößert, so daß der Gasanalysator über längere Zeiträume ohne Nachkalibrierung in Betrieb bleiben kann.

Weiterbildungen der Erfindung sind in den abhängigen Ansprüchen dargelegt. Weitere Vorteile der Erfindung ergeben sich aus den abhängigen Ansprüchen und der folgenden Beschreibung eines Ausführungsbeispiels.

Figur 1 zeigt im Längsschnitt den Aufbau eines Einstrahl-NDIR-Gasanalysators mit dem reflektierenden Mittel zur periodischen Unterbrechung der aus dem rückwärtigen Fenster der zweiten Detektorkammer austretenden Strahlung in Form einer motorisch angetriebenen Kreisscheibe mit reflektierenden und nicht reflektierenden Halbsektoren, siehe auch Figur 2.

In Figur 3 ist in einem Diagramm die Wirkungsweise und in Figur 4 eine Schaltungsanordnung zur Gewinnung des Meßsignals dargestellt.

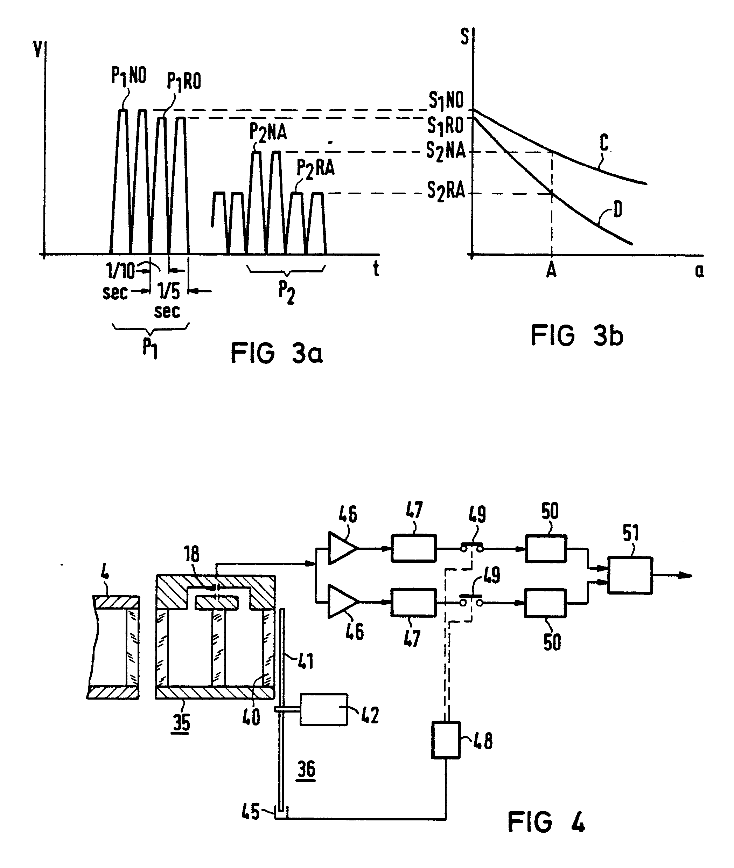

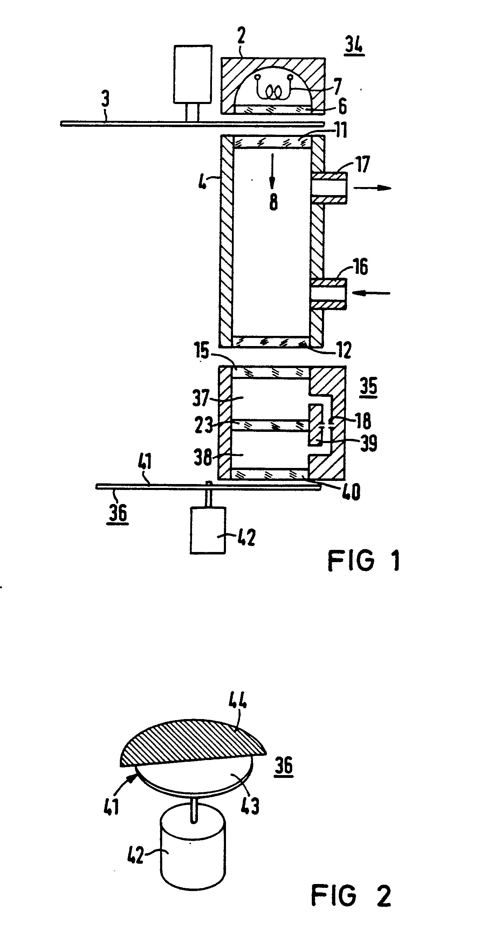

Der in Figur 1 dargestellte NDIR-Gasanalysator 34 besteht aus einer Infrarot-Strahlungsquelle 7, die in einer mit einem Fenster 6 abgeschlossenen Strahlerkammer 2 angeordnet ist.

Ein rotierender Unterbrecher 3, z. B. in Form eines Blendenrads, unterbricht die aus dem Fenster 6 austretende Strahlung periodisch, bevor sie in Weiterführung des Strahlengangs 8 durch ein stirnseitiges Fenster 11 in eine Meßzelle 4 eintritt, die von einem über einen Einlaß 16 zugeführten und einen Auslaß 17 abgeführten Gasgemisch durchströmt wird, eine von dessen Komponenten, im weiteren Meßgas genannt, quantitativ zu bestimmen ist.

Aus der Meßzelle 4, in der ein Teil der zugeführten Strahlung absorbiert wird, tritt der übrige Strahlungsanteil durch ein Fenster 12 an der rückwärtigen Stirnseite in ein pneumatisches Detektorsystem 35 ein, welches aus einer ersten Detektorkammer 37 und einer im Strahlengang dahinter angeordneten zweiten Detektorkammer 38 besteht, die beide mit dem Meßgas oder einem gleiches Absorptionsverhalten aufweisenden Gas gefüllt und an ihren Stirnseiten mit strahlungsdurchlässigen Fenstern 15, 23 und 40 versehen sind.

Die erste Detektorkammer 37 ist mit der zweiten Detektorkammer 38 über eine Leitung 39 verbunden, in welcher ein auf Druck oder Strömung ansprechender Meßfühler 18 angeordnet ist.

Hinter dem rückwärtigen Fenster 40 der zweiten Detektorkammer 38 ist als reflektierendes Mittel 36, das periodisch in den Strahlengang 8 der austretenden Strahlung bringbar ist, eine um eine zum Strahlengang 8 parallele Achse rotierende, von einem Motor 42 angetriebene Kreisscheibe 41 angeordnet, deren dem rückwärtigen Fenster 40 der zweiten Detektorkammer 38 zugekehrte Fläche, wie in Figur 2 dargestellt, in einen reflektierenden Sektor 43 und einen nicht reflektierenden Sektor 44 unterteilt ist. Die Trennungslinie zwischen den Sektoren 43 und 44 ist bei diesem Ausführungsbeispiel ein Durchmesser der Kreisscheibe 41, deren Radius größer oder gleich dem Durchmesser des rückwärtigen Fensters 40 der zweiten Detektorkammer 38 ist.

Die Drehzahl des Motors 42, der die Kreisscheibe 41 des reflektierenden Mittels 36 antreibt, ist so eingestellt, daß die Periode, mit welcher der reflektierende Sektor 43 und der nicht reflektierende Sektor 44 abwechselnd in den Strahlengang gebracht werden, um ein ganzzahlig Vielfaches größer ist als die Periode des rotierenden Unterbrechers 3 zwischen der Strahlungsquelle 7 und der Meßzelle 4.

Zur Funktion : Die elektrischen Ausgangssignale des Meßfühlers 18 werden nicht nur von dem rotierenden Unterbrecher 3 moduliert, sondern auch durch das langsamer umlaufende, reflektierende Mittel 36. Beträgt beispielsweise die Periode des rotierenden Unterbrechers 3 eine Zehntelsekunde und die des reflektierenden Mittels 36 eine Fünftelsekunde, so ergibt sich der in Figur 3a in einem Diagramm dargestellte Signalverlauf, wobei über der Zeit t der Verlauf V des gleichgerichteten Ausgangssignals des Meßfühlers aufgetragen ist.

Beim Meßgasgehalt Null ergibt sich die Signalgruppe $P_1$, die aus je zwei Doppelimpulsen besteht, und zwar dem Doppelimpuls $P_1NO$, wenn keine Reflexion der aus der zweiten Detektorkammer austretenden Strahlung stattfindet, und dem Doppelimpuls $P_1RO$, wenn die Strahlung in die zweite Detektorkammer reflektiert wird.

Enthält das zu untersuchende Gasgemisch einen Anteil A des Meßgases, so entsteht in ähnlicher Weise die Signalgruppe $P_2$ mit dem Doppelimpuls $P_2NA$ bei nicht reflektierter und $P_2RA$ bei reflektierter Strahlung.

In dem Diagramm der Figur 3b ist die Signalamplitude S über der Gaskonzentration a aufgetragen. Die Kurve C zeigt den Signalverlauf bei nicht reflektierter Strahlung, die Kurve D den bei reflektierter Strahlung. Der Verlauf der Kurven C und D hängt im wesentlichen von der Konstruktion des Detektorsystems 35 und dessen Gasfüllung sowie von der Länge der Meßzelle 4 ab, sie sind demgemäß empirisch zu optimieren. $S_1NO$, $S_1RO$, $S_2NA$, $S_2RA$ sind die Signalamplituden der in Figur 3a dargestellten Doppelimpulse $P_1NO$, $P_1RO$, $P_2NA$ und $P_2RA$. Die Signalamplituden sind abhängig von dem von der Strahlungsquelle ausgehenden Lichtstrom und Ablagerungen auf den Fenstern der Meßzelle.

Bildet man jedoch die Quotienten $S_1NO/S_1RO$ und $S_2NA/S_2RA$, so sind deren Beträge nur noch von der Meßgaskonzentration abhängig.

In Figur 4 sind in einem Blockschaltbild die signalverarbeitenden Mittel zur Bildung eines dem Meßgasgehalt entsprechenden Meßsignals dargestellt. Die Bezugszeichen des links dargestellten Teils des Gasanalysators entsprechen denen in Figur 1 gebrauchten. Man erkennt das Detektorsystem 35 mit dem Meßfühler 18, das hinter dem rückwärtigen Fenster 40 des Detektorsystems 35 angeordnete reflektierende Mittel 36 mit der Kreisscheibe 41 und dem Motor 42.

Die Ausgangssignale des Meßfühlers 18 werden parallel in Verstärkern 46 verstärkt und in Vollweggleichrichtern 47 gleichgerichtet. Ein Stellungsgeber 45 tastet die Stellung des reflektierenden bzw. nicht reflektierenden Sektors der Kreisscheibe 41 ab und gibt über die Schalteinrichtung 48 ein Synchronisiersignal auf die Synchronisiergleichrichter 49. Die in den Halteschaltungen 50 gespeicherten Meßdaten werden nacheinander abgerufen und in dem Quotientenbildner 51 verarbeitet zu dem die Konzentration des Meßgases in dem Gasgemisch abbildenden Meßsignal $S_2NA/S_2RA$ gemäß der Beziehung

$$\frac{S_1NO}{S_1RO} < \frac{S_2NA}{S_2RA} \qquad \text{(siehe Figur 3b)}$$

Bei fortschreitender Verschlechterung der Strahlungsquelle oder Verschmutzung der Meßzelle kann der Absolutwert des Ausgangssignals des Meßfühlers 18 so klein werden, daß das Signal-/Rauschverhältnis entsprechend verringert und für den Meßbetrieb nicht mehr brauchbar wird. Aus diesem Grunde ist es möglich, eine Überwachungseinrichtung für den Absolutwert des Ausgangssignals des Meßfühlers vorzusehen, die bei Unterschreiten eines Grenzwerts anspricht.

**Patentansprüche**

1. Nichtdispersiver Infrarot-Gasanalysator mit einer Strahlungsquelle (7),
einem rotierenden Unterbrecher (3) zur periodischen Unterbrechung der IR-Strahlung,
einer das zu untersuchende Gasgemisch enthaltenden Meßzelle (4), die an ihren Stirnseiten mit strahlungsdurchlässigen Fenstern (11, 12) versehen im Strahlengang (8) angeordnet ist,
einem im Strahlengang hinter der Meßzelle (4) angeordneten pneumatischen Detektorsystem (35), bestehend aus einer ersten Detektorkammer (37) und einer im Strahlengang dahinter angeordneten zweiten Detektorkammer (38), die beide mit dem Meßgas oder einem gleiches Absorptionsverhalten aufweisenden Gas gefüllt und an ihren Stirnseiten mit strahlungsdurchlässigen Fenstern (15, 23, 40) versehen sind, sowie einem in einer die Detektorkammern (37 und 38) verbindenden Leitung (39) angeordneten, auf Druck oder Strömung ansprechenden Meßfühler (18),
signalverarbeitenden Mitteln zur Bildung eines dem Meßgasgehalt entsprechenden Meßsignals aus dem elektrischen Ausgangssignal des Meßfühlers (18),
einem mechanisch verstellbaren, reflektierenden Mittel (36) zur Reflexion mindestens eines Teils der aus dem rückwärtigen Fenster der zwei-

# 0 093 939

ten Detektorkammer austretenden Strahlung in diese zurück,
dadurch gekennzeichnet,

daß das reflektierende Mittel (36) periodisch in den Strahlengang der austretenden Strahlung bringbar ist und

daß die signalverarbeitenden Mittel eine Schaltungsanordnung (45-51) zur Bildung des Verhältnisses der Ausgangssignale des Meßfühlers (18) bei reflektierter und bei nicht reflektierter Strahlung enthalten.

2. Gasanalysator nach Anspruch 1, dadurch gekennzeichnet, daß die Periode des reflektierenden Mittels (36) größer ist als die Periode des Unterbrechers (3).

3. Gasanalysator nach Anspruch 1, dadurch gekennzeichnet, daß das reflektierende Mittel (36) eine um eine zum Strahlengang (8) parallele Achse rotierende Kreisscheibe (41) ist, deren dem rückwärtigen Fenster (40) der zweiten Detektorkammer (38) zugekehrte Fläche in einen reflektierenden Sektor (43) und einen nicht reflektierenden Sektor (44) aufgeteilt ist.

4. Gasanalysator nach Anspruch 3, dadurch gekennzeichnet, daß die Trennungslinie zwischen den Sektoren (43, 44) ein Durchmesser der Kreisscheibe (41) ist.

5. Gasanalysator nach Anspruch 3, dadurch gekennzeichnet, daß der Radius der Kreisscheibe (41) größer als der oder gleich dem Durchmesser des rückwärtigen Fensters (40) ist.

## Claims

1. A non-dispersive infrared gas analyser comprising
a radiation source (7),
a rotating interrupter (3) for the periodic interruption of the IR radiation,
a measuring cell (4) which contains the gas mixture to be examined and which at its end faces is provided with radiation-transmissive windows (11, 12) in the light path (8),
a pneumatic detector system (35) which is arranged in the light path behind the measuring cell (4) and which consists of a first detector chamber (37) and a second detector chamber (38) arranged behind it in the light path, and which detector chambers are both filled with the gas to be measured or a gas which exhibits the same adsorption behaviour, and have radiation-transmissive windows (15, 23, 40) at their end faces, and a measuring sensor (18) which is arranged in a line (39) connecting the detector chambers (37 and 38) and responds to pressure or flow,
signal-processing means for producing a measuring signal which corresponds to the content of the gas to be measured from the electrical output signal of the measuring sensor (18),
a mechanically adjustable, reflecting means (36) for reflecting at least a part of the radiation emerging from the rearward window of the second detector chamber, back into the latter, characterised in
that the reflecting means (36) can be periodically brought into the light path of the emerging radiation ; and
that the signal-processing means comprises a circuit arrangement (45-51) for forming the ratio between the output signals of the measuring sensor (18) for reflected and non-reflected radiation.

2. A gas analyser as claimed in Claim 1, characterised in that the period of the reflecting means (36) is greater than the period of the interrupter (3).

3. A gas analyser as claimed in Claim 1, characterised in that the reflecting means (36) is a circular disc (41) which rotates about an axis parallel to the light path (8) and the surface of which facing the rearward window (40) of the second detector chamber (38) is divided into a reflecting sector (43) and a non-reflecting sector (44).

4. A gas analyser as claimed in Claim 3, characterised in that the separating line between the sectors (43, 44) is a diameter of the circular disc (41).

5. A gas analyser as claimed in Claim 3, characterised in that the radius of the circular disc (41) is greater than or the same as the diameter of the rearward window (40).

## Revendications

1. Analyseur de gaz à infrarouge non dispersif, comprenant
une source de rayonnement (7),
un interrupteur tournant (3) pour interrompre périodiquement le rayonnement IR,
une cellule de mesure (4) contenant le mélange gazeux à examiner, qui est disposée dans le faisceau (8), et est munie à ses extrémités de fenêtres (11, 12) transparentes au rayonnement,
un système détecteur pneumatique (35), placé dans le faisceau derrière la cellule (4), constitué d'une première chambre de détecteur (37) et d'une deuxième chambre de détecteur (38) disposée derrière elle dans le faisceau, qui sont toutes deux remplies du gaz à mesurer ou d'un gaz représentant le même comportement d'absorption et qui sont munies à leurs extrémités de fenêtres (15, 23, 40) laissant passer le rayonnement, ainsi que d'un capteur (18) sensible à la pression ou à l'écoulement, qui est monté dans une canalisation (39) reliant les chambres de détecteur (37 et 38),
des moyens de traitement des signaux pour former un signal de mesure correspondant à la teneur en gaz à mesurer à partir du signal de sortie électrique du capteur (18),
un moyen réflecteur (36) déplaçable mécaniquement pour réfléchir au moins une partie du rayonnement sortant de la fenêtre arrière de la deuxième chambre de détecteur dans celle-ci, caractérisé en ce
que le moyen réflecteur (36) peut être amené périodiquement dans le faisceau du rayonnement sortant et
que les moyens de traitement des signaux

4

contiennent un montage (45-51) pour former le rapport des signaux de sortie du capteur (18) lorsque le rayonnement est réfléchi et lorsqu'il n'est pas réfléchi.

2. Analyseur selon la revendication 1, caractérisé en ce que la période du moyen réflecteur (36) est plus longue que la période de l'interrupteur (3).

3. Analyseur selon la revendication 1, caractérisé en ce que le moyen réflecteur (36) est un disque circulaire (41) tournant autour d'un axe parallèle au faisceau (8), et dont la face dirigée vers la fenêtre arrière (40) de la deuxième chambre de détecteur (38) est partagée en un secteur réfléchissant (43) et un secteur non réfléchissant (44).

4. Analyseur selon la revendication 3, caractérisé en ce que la ligne de séparation entre les secteurs (43, 44) est une diagonale du disque circulaire (41).

5. Analyseur selon la revendication 3, caractérisé en ce que le rayon du disque circulaire (41) est supérieur ou égal au diamètre de la fenêtre arrière (40).

FIG 3a

FIG 3b

FIG 4

FIG 1

FIG 2